# EUROPÄISCHE PATENTANMELDUNG

(11) **EP 1 149 677 A2**
(43) Veröffentlichungstag der Anmeldung: **31.10.2001**
(21) Anmeldenummer: 01250116.9
(22) Anmeldetag: 03.04.2001
(51) Int. Cl.: B29C 41/18, B29C 41/52, B29C 41/22, B29C 41/46, B29C 33/04, B29C 33/38, B29C 33/46

(54) **Verfahren und Vorrichtung zur Herstellung einer Doppelsluhhaut**

(30) Priorität: 28.04.2000 DE 10022645; 28.04.2000 DE 10022638; 28.04.2000 DE 10022642; 28.04.2000 DE 10022686; 28.04.2000 DE 10022643; 28.04.2000 DE 10022644; 28.04.2000 DE 10022646
(71) Anmelder: Volkswagen AG, 38436 Wolfsburg (DE)
(72) Erfinder: Gabbert, Heiko, 49377 Vechta (DE); Blaurock, Jochen, 3811 Braunschweig (DE); Mohr, Jörg, 38106 Braunschweig (DE); Peters, Katja, 38102 Braunschweig (DE)
(74) Vertreter: Schneider, Henry, Dipl.-Ing.

(57) **Zusammenfassung**

Die Erfindung betrifft ein Verfahren und eine Vorrichtung zur Herstellung einer Doppelslushhaut (20), wobei an einer Kontur einer Galvanoform (10) eine erste Kunststoffschicht (18) erzeugt wird, anschließend auf der ersten Kunststoffschicht (18) eine zweite expandierende Kunststoffschicht (14) erzeugt wird, deren innenkontur durch einen Formstempel (30) oder durch einen Kunststoffträger (16) erzeugt wird.

Es ist vorgesehen, dass bei der Herstellung einer Doppelslushhaut (20) der Bildungs-, und/oder Abform-, und/oder Entformungsprozess beeinflusst wird beziehungsweise dass entsprechende Mittel zur Beeinflussung des Bildungs-, und/oder Abform-, und/oder Entformungsprozess bei der Herstellung einer Doppelslushhaut (20) vorgesehen sind.

## Beschreibung

Die Erfindung betrifft ein Verfahren zur Herstellung einer Doppelslushhaut mit den im Oberbegriff des Anspruchs 1 genannten Merkmalen sowie die dazugehörige Vorrichtung mit den im Oberbegriff des Anspruchs 18 genannten Merkmalen.

Aus der WO 96/33060 und WO 97/48537 sind Verfahren und Vorrichtungen zur Herstellung einer Doppelslushhaut bekannt. Diese Doppelslushhäute werden in Verbindung mit einem Instrumententräger unter anderem für automobile Instrumententafeln eingesetzt. Die Herstellung erfolgt in einer Galvanoform mit einer die Außenkontur der Doppelslushhaut bestimmenden Form. In diese Galvanoform wird ein Polymerpulver eingebracht. Durch Rotation der Galvanoform bildet sich an einer beheizbaren Innenwandung der Galvanoform aus dem Polymerpulver eine kompakte Formhaut. Anschließend wird der Galvanoform ein zweites, mit Treibmitteln beaufschlagtes Polymerpulver zugeführt. Durch erneute Rotation der Galvanoform bildet sich an der bereits vorhandenen kompakten Formhaut eine Schaumschicht. Der anschließende Schäumungsprozess und die Ausbildung der Innenkontur der Doppelslushhaut kann auf zwei grundsätzlich verschiedene Arten erfolgen.

In die Galvanoform wird ein so genannter Formstempel mit einer der Innenkontur der Doppelslushhaut definierten Kontur eingefahren. Danach beginnt der Schäumungsprozess durch Expansion des mit Treibmitteln beaufschlagten Polymerpulvers. Nach Beendigung des Schäumvorganges wird der Formstempel ausgefahren und die Doppelslushhaut entformt. Die Entformung der Doppelslushhaut erfolgt in der Regel durch Herausziehen der Doppelslushhaut aus der Form. Beschädigungen der Oberfläche der Doppelslushhaut, sowie der Doppelslushhaut selbst, können dabei nicht ausgeschlossen werden. Danach wird die Innenseite der Doppelslushhaut mit einem Kunststoffträger, der die Form der Doppelslushhaut besitzt, verklebt. Der Vorteil dieser Herstellungsart besteht darin, dass die Außenkontur der Doppelslushhaut geringe Hinterschnitte aufweisen kann, die beim Ausformen nicht weiter störend wirken. Nachteilig ist aber der zusätzliche Arbeits- und Zeitaufwand beim nachträglichen Verkleben der Doppelslushhaut mit dem Kunststoffträger.

In einer zweiten Art der Herstellung wird in die Galvanoform direkt der Kunststoffträger mit einer ebenfalls der Innenkontur der Doppelslushhaut definierten Kontur eingefahren. Danach beginnt wiederum der Schäumungsprozess durch Expansion des mit Treibmitteln beaufschlagten Polymerpulvers, wobei gleichzeitig eine Verbindung der Doppelslushhaut mit dem Kunststoffträger erfolgt. Nach Beendigung des Schäumvorganges erfolgt ebenfalls die Entformung des Verbundbauteiles aus der Galvanoform. Bei dieser Variante entfällt der Arbeitsschritt des nachträglichen Verklebens der Doppelslushhaut mit dem Kunststoffträger. Konstruktiv bedingte Hinterschnitte der Außenkontur der Doppelslushhaut können dabei aber nicht realisiert werden, da dann eine Entformung des Verbundbauteiles aus der Galvanoform ohne Beschädigung der Doppelslushhaut nicht mehr möglich ist.

Nachteilig bei diesen Herstellungsverfahren ist weiterhin, dass eine Beeinflussung des Bildungsprozesses der Doppelslushhaut in der Galvanoform, besonders hinsichtlich des Schäumungs- und Abformprozesses, nur in geringem Maße über die Galvanoform möglich ist. Bei auftretenden Materialschwankungen im Ausgangsmaterial der herzustellenden Doppelslushhaut wird die Maßhaltigkeit der Doppelslushhaut negativ beeinflusst. Eine Einflussnahme auf den Herstellungsprozess bei Materialschwankungen ist jedoch nicht möglich. Besonders bei der Expansion des mit Treibmitteln beaufschlagten Polymerpulvers muss eine gleichmäßige Verteilung der Schaumdicke durch einen gleichmäßigen Abstand der Innenwandung der Galvanoform zur Außenwandung der Gegenform gewährleistet sein. Anderenfalls entstehen an Stellen mit geringer Wandstärke erhebliche Drücke, die über die Oberfläche der Galvanoform summiert die Zuhaltekräfte enorm erhöhen. Ein gleichbleibender Abstand lässt sich insbesondere in solchen Bereichen nicht realisieren, in denen durch die Außenform der Doppelslushhaut bedingt zum Beispiel Hinterschnitte, wie Abformstempel, notwendig wären.

Die zur Erzeugung der Doppelslushhaut verwendete Galvanoform besteht in der Regel aus dünnwandigen, mit einer gleichbleibenden Wandstärke versehene Formen, die im Galvanisierungsverfahren hergestellt wurden. Als Material für die Herstellung der Galvanoformen wird Nickel verwendet. Durch das Galvanisierungsverfahren lassen sich sehr formgenaue Galvanoformen herstellen. Nachteilig bei diesen Formen ist ihre geringe Stabilität hinsichtlich der auftretenden Druckkräfte bei der Herstellung der Doppelslushhaut. Durch die geringe Stabilität der Galvanoform besteht auch keine Möglichkeit, in der Galvanoform mechanisch betätigte Zusatzeinrichtungen anzuordnen. Außerdem können diese Galvanoformen die beim Herstellungsprozess der Doppelslushhaut entstehenden Druckkräfte nicht vollständig aufnehmen. Das hat zur Folge, dass sich die Form während des Herstellungsprozesses verzieht. Formänderungen an der zu erzeugenden Doppelslushhaut sind nicht zu vermeiden.

Die Formstempel zur Erzeugung der Innenkontur der in der Galvanoform hergestellten Doppelslushhaut sind aus Stahl gefertigt. Nachteilig dabei ist, dass bei vorgesehenen, geringfügigen Änderungen an der Innenkontur der Doppelslushhaut aufwendige Feinanpassungen und Änderungen am Formstempel notwendig sind. Der Aufwand zur Bearbeitung von Formänderungen am Formstempel ist hoch. Die Maßgenauigkeit der durchzuführenden Änderungen ist schwer einhaltbar.

Der Erfindung liegt daher die Aufgabe zugrunde, ein Verfahren und eine Vorrichtung zur Herstellung einer Doppelslushhaut der eingangs genannten Art zu schaffen, mit dem beziehungsweise mit der die Nachteile des Standes der Technik beseitigt werden.

Diese Aufgabe wird durch ein Verfahren zur Herstellung einer Doppelslushhaut mit den im Anspruch 1 genannten Merkmalen sowie durch eine Vorrichtung mit den im Anspruch 18 genannten Merkmalen gelöst. Dadurch, dass bei der Herstellung einer Doppelslushhaut der Bildungs-, und/oder Abform-, und/oder Entformungsprozess beeinflusst wird beziehungsweise dass durch Mittel der Bildungs-, und/oder Abform-, und/oder Entformungsprozess bei der Herstellung einer Doppelslushhaut beeinflusst wird, wird die Qualität der herzustellenden Doppelslushhaut verbessert und der Arbeits- und Zeitaufwand des Herstellungsprozesses reduziert. Außerdem kann auf die Herstellungsgenauigkeit des Erzeugnisses gezielt Einfluss genommen werden.

In einer bevorzugten Ausgestaltung der Erfindung wird zum Entformen zwischen der ersten Kunststoffschicht und der Form ein Überdruck erzeugt, wobei gemäß der erfindungsgemäßen Vorrichtung zum Entformen der Doppelslushhaut eine Einrichtung zur Erzeugung eines Überdruckes zwischen Galvanoform und Doppelslushhaut angeordnet ist. Dadurch können auch Doppelslushhäute, die als Verbundbauteile mit einem Kunststoffträger verbunden und deren Außenkontur mit konstruktiv bedingten, leichten Hinterschnitten versehen sind, problemlos aus der Galvanoform entformt werden. Dadurch wird die Herstellung der Doppelslushhaut bei gleichzeitiger Verbindung mit dem Kunststoffträger in einem Arbeitsschritt ermöglicht, wodurch der Arbeits- und Zeitaufwand des Herstellungsprozesses reduziert wird.

In einer weiteren bevorzugten Ausgestaltung der Erfindung ist die Größe des Überdrucks einstellbar. Entsprechend einer bevorzugten Ausgestaltung der erfindungsgemäßen Vorrichtung sind Querschnittsflächen der einzelnen Durchbrüche und/oder Mikrolöcher in der Galvanoform zur Zuführung des Überdruckes mit unterschiedlichen Größen ausgebildet und gemäß einer weiteren bevorzugten Ausgestaltung der Erfindung sind die Durchbrüche und/oder Mikrolöcher zur Zuführung eines Überdruckes ungleichmäßig verteilt über die gesamte Oberfläche der Galvanoform angeordnet. Dadurch kann der Druck zum Entformen genau dort entsprechend seiner Größe eingestellt werden, wo er benötigt wird. Die Mikrolöcher sind so gestaltet, dass sie sich auf der späteren Bauteiloberfläche nicht abzeichnen.

In einer ebenfalls weiteren bevorzugten Ausgestaltung der Erfindung wird entsprechend dem erfindungsgemäßen Verfahren zur Beeinflussung des Bildungs- und/oder Abformprozesses der Kunststoffschichten der Formstempel temperiert und gemäß der dazugehörigen Vorrichtung sind dem Formstempel Einrichtungen zur Zuführung eines Temperierungsmittels angeordnet. Demzufolge wird neben der Beeinflussung des Bildungs- und/oder Abformprozesses der Kunststoffschichten über die Galvanoform, auch über den Formstempel gezielt Einfluss auf den Prozess genommen. Durch entsprechende Zuführung der Temperierungsmittel wird der Aufschäumprozess sowie der Abformprozess unterstützt, wodurch die Herstellungszeit verkürzt wird. Durch die Temperierung des Formstempels ist eine Größenbeeinflussung des Formstempels und damit der abgeformten Kontur möglich. Durch Materialschwankungen im Ausgangsmaterial hervorgerufene Veränderungen in der Maßgenauigkeit können damit weitestgehend ausgeglichen werden.

Eine weitere bevorzugte Ausgestaltung der Erfindung sieht vor, in die Vorrichtung wenigstens einen Auswerfer zum Entformen der Doppelslushhaut zu integrieren, wodurch auch Doppelslushhäute, die als Verbundbauteile mit einem Kunststoffträger verbunden und deren Außenkontur mit konstruktiv bedingten, leichten Hinterschnitten versehen sind, problemlos aus der Galvanoform entformt werden. Dadurch wird die Herstellung der Doppelslushhaut bei gleichzeitiger Verbindung mit dem Kunststoffträger in einem Arbeitsschritt ermöglicht, wodurch der Arbeits- und Zeitaufwand des Herstellungsprozesses reduziert wird.

In einer bevorzugten Ausgestaltung der Erfindung entspricht die Form der Auswerferplatten im Berührungsbereich mit der Oberfläche der Doppelslushhaut als Negativform der Form der Doppelslushhaut. Das bewirkt, dass die Flächenpressung zwischen Auswerferplatte und Doppelslushhaut während des Entformens gering gehalten werden kann.

In einer weiteren bevorzugten Ausgestaltung der Erfindung sind die Auswerfer in dem Bereich der Oberfläche der zu entformenden Form angeordnet, der später nicht mehr sichtbar ist. Das hat zur Folge, dass beim Entformen die sichtbare Oberfläche der Doppelslushhaut, zum Beispiel durch Auswerfermarkierungen, nicht beschädigt wird.

Gemäß einer ebenfalls bevorzugten Ausgestaltung der Erfindung ist einem ersten Hohlraumbereich mit einer im Wesentlichen gleichbleibenden Querschnittsfläche ein zweiter Hohlraumbereich mit einer gegenüber der ersten Querschnittsfläche geringeren Querschnittsfläche und diesem ein dritter Hohlraumbereich mit einer gegenüber der zweiten Querschnittsfläche sich vergrößernden Querschnittsfläche zugeordnet. Dadurch wird mit einfachen Mitteln bei der Herstellung einer Doppelslushhaut eine annähernd gleichmäßige Verteilung des mit Treibmitteln beaufschlagten Pulvers über das Gesamtvolumen des Hohlraumes zwischen Innenwandung der Galvanoform und Außenwandung der Gegenform erreicht. Die konstruktionsbedingten Querschnittsverringerungen der Wandstärke werden durch die sich unmittelbar anschließenden Bereiche mit sich vergrößernden Querschnittsflächen ausgeglichen. Das heißt, dass die Volumenreduzierung infolge der Querschnittsverringerung durch die sich daran anschließende Querschnitterweiterung nahezu ausgeglichen wird. Auf diese Weise findet aufgrund des entstehenden Druckgefälles während des Ausschäumens ein Materialtransport des mit Treibmitteln beaufschlagten Pulvers von dem Bereich mit der geringeren Querschnittsfläche zu dem Bereich mit der größeren Querschnittsfläche statt, so dass durch eine annähernd gleichmäßige Verteilung des mit Treibmitteln beaufschlagten Pulvers über das Gesamtvolumen des Hohlraumes beim Expansionsvorgang Druckerhöhungen in der Galvanoform weitestgehend vermieden werden. Durch diese erfindungsgemäßen Maßnahmen wird gleichzeitig eine größere Gestaltungsmöglichkeit der Außenform der Doppelslushhaut erzielt.

Eine bevorzugte Ausgestaltung der Erfindung sieht vor, dass die Galvanoform aus wenigstens zwei Baugruppen besteht. Dadurch wird erreicht, dass die Stabilität der Galvanoform erhöht wird, wodurch eine Anordnung von mechanisch betätigten Baugruppen in der Galvanoform bei Einhaltung der Formgenauigkeit der herzustellenden Doppelslushhaut möglich ist.

In einer bevorzugten Ausgestaltung der Erfindung sind die Baugruppen mit mechanischen Funktionen mechanisch betätigte Auswerfer. Durch die Anordnung der Auswerfer im Bereich der Galvanoform erfolgt ein leichterer Austrag der hergestellten Doppelslushhaut aus der Galvanoform.

In einer weiteren bevorzugten Ausgestaltung der Erfindung sind an den Außenseiten der Galvanoform Versteifungen angeordnet, wodurch die Biegesteifigkeit der Galvanoform wesentlich erhöht wird. Die durch den Formstempel oder den Kunststoffträger in die Galvanoform eingebrachten Druckkräfte können durch die Form aufgenommen werden, ohne dass dabei Formveränderungen an der Galvanoform auftreten. Dadurch werden auch Formänderungen an der herzustellenden Kontur der Doppelslushhaut nahezu ausgeschlossen.

In einer bevorzugten Ausgestaltung der Erfindung besteht der Formstempel zumindest bereichsweise aus einem fertigungstechnisch, mechanisch leicht bearbeitbaren Material, so dass Formänderungen an dem Formstempel schnell und mit einfachen Mitteln durchgeführt werden können. Der Aufwand für notwendige Feinanpassungen und Konturänderungen am Formstempel wird reduziert. Außerdem können notwendige Änderungen am Formstempel mit einer höheren Genauigkeit durchgeführt werden.

In einer bevorzugten Ausgestaltung der Erfindung besteht ein Kern des Formstempels aus einem stabilen Material und die Oberfläche des Formstempels im Bereich der Doppelslushhaut aus einem fertigungstechnisch, mechanisch leicht bearbeitbaren Material. Das hat zur Folge, dass bei Beibehaltung der Stabilität des Formstempels notwendige Feinanpassungen und Konturänderungen am Formstempel mit einfachen Mitteln durchgeführt werden können.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Seitenansicht der erfindungsgemäßen Vorrichtung zur Herstellung einer Doppelslushhaut im Schnitt unter Verwendung eines Kunststoffträgers als Gegenform;
- Figur 2: eine Seitenansicht der erfindungsgemäßen Vorrichtung zur Herstellung einer Doppelslushhaut im Schnitt unter Verwendung eines Formstempels als Gegenform;
- Figur 3: eine Variante der erfindungsgemäßen Vorrichtung nach Figur 2;
- Figur 4: eine Variante der erfindungsgemäßen Vorrichtung nach Figur 1;
- Figur 5: eine weitere Variante der erfindungsgemäßen Vorrichtung gemäß Figur 2;
- Figur 6: eine Schnittdarstellung der erfindungsgemäßen Galvanoform;
- Figur 7: eine weitere Variante der erfindungsgemäßen Vorrichtung gemäß Figur 1 und
- Figuren 8 bis 10: jeweils eine weitere Variante der erfindungsgemäßen Vorrichtung gemäß Figur 2.

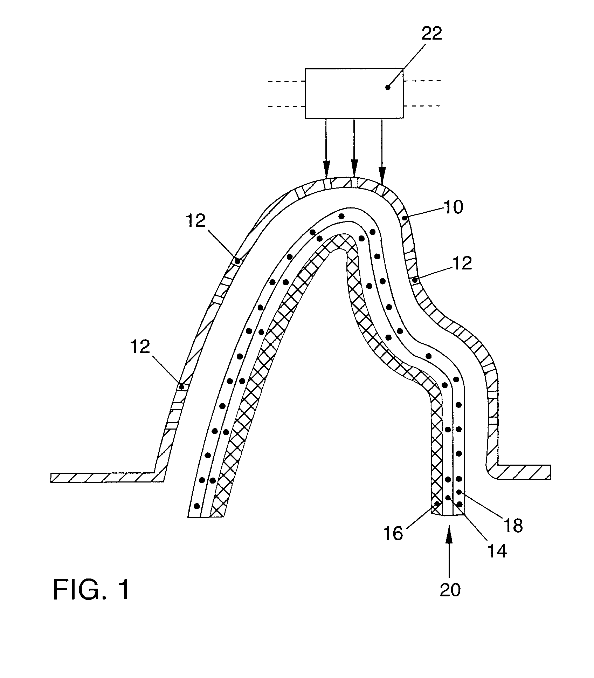

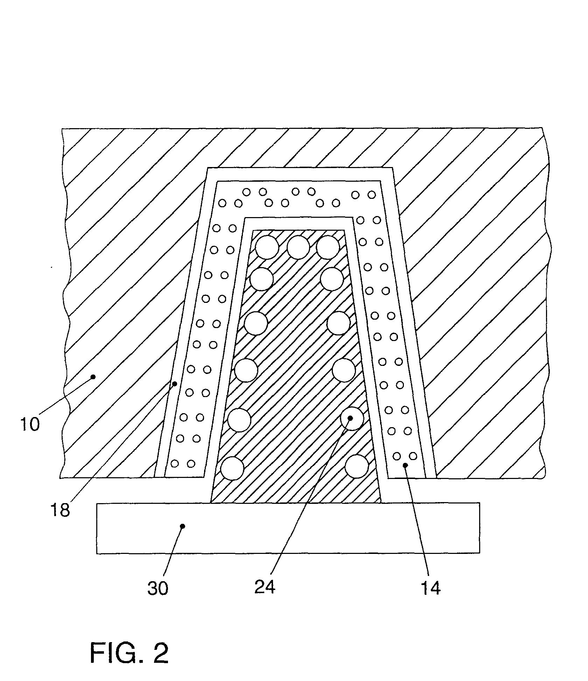

Die Erfindung wird erläutert am Beispiel der Herstellung einer Instrumententafel, wie sie beispielsweise im Automobilbau verwendet wird. Dabei erfolgt nach der Doppelslushtechnik die Herstellung der Doppelslushhaut 20 auf zwei verschiedene Arten. Gemäß der Figur 1 erfolgt die Herstellung der Doppelslushhaut 20 und die gleichzeitige Verbindung mit einem Kunststoffträger 16 als Instrumententräger vorteilhafterweise in einem Arbeitsschritt in einer Galvanoform 10. Die Herstellung der Doppelslushhaut 20 gemäß Figur 2 erfolgt ebenfalls in einer Galvanoform 10, nur dass zum Abformen der herzustellenden Doppelslushhaut 20 ein Formstempel 30 in die Galvanoform 10 eingefahren wird. Nach dem Entformen der Doppelslushhaut 20 aus der Galvanoform 10 wird in einem nachfolgenden Arbeitsschritt die Innenseite der Doppelslushhaut 20 mit dem Kunststoffträger 16 verklebt.

Gemäß Figur 1 erfolgt die Herstellung einer Doppelslushhaut 20 in Verbindung mit einem Kunststoffträger 16 nach der an sich bekannten Doppelslushtechnik in einer Galvanoform 10. Dabei wird an der Innenkontur der Galvanoform 10 eine erste Kunststoffschicht 18 erzeugt. Anschließend wird auf der ersten Kunststoffschicht 18 eine zweite expandierende Kunststoffschicht 14 erzeugt, wobei nach Einbringen eines Kunststoffträgers 16, mit einer der Innenkontur der Doppelslushhaut 20 bestimmenden Form, in die Galvanoform 10 der Schäumungsprozess beginnt. Dabei erfolgt die Verbindung des expandierenden Materials der zweiten Kunststoffschicht 14 mit dem Kunststoffträger 16.

Nach erfolgtem Herstellungsprozess muss die Doppelslushhaut 20 mit dem Kunststoffträger 16 aus der Galvanoform 10 entformt werden. Erfindungsgemäß erfolgt ein Entformen eines Formteils aus einer Galvanoform 10 unter weitestgehender Vermeidung von Beschädigungen der Doppelslushhaut 20 im späteren sichtbaren Bereich, insbesondere bei konstruktiv bedingten, leichten Hinterschnitten der Außenkontur der Doppelslushhaut 20 dadurch, dass zum Entformen zwischen der ersten Kunststoffschicht 18 und der Galvanoform 10 ein Überdruck erzeugt wird, wobei der Überdruck über die Galvanoform 10 zugeführt wird. Entsprechend der erfindungsgemäßen Vorrichtung erfolgt dabei die Zuführung des Überdrucks über in der Galvanoform 10 angeordnete Durchbrüche und/oder Mikrolöcher 12.

Der vorzugsweise auf pneumatische Weise mittels einer schematisch dargestellten Druckquelle 22 erzeugte Druck zur Entformung der Doppelslushhaut 20 und des Kunststoffträgers 16 ist abhängig von der äußeren Form der Doppelslushhaut 20 sowie von den auftretenden Haftkräften zwischen der Galvanoform 10 und der ersten Kunststoffschicht 18 der Doppelslushhaut 20. Bei konstruktiv bedingten, leichten Hinterschnitten, die durch die Außenform der Doppelslushhaut 20 vorgegeben sind, werden größere Druckkräfte zum Entformen benötigt. Weiterhin wird die zu verwendende Druckkraft durch die Materialbeschaffenheit der Doppelslushhaut 20 bestimmt. Es muss sichergestellt werden, dass die Druckkräfte nicht so groß werden, dass sie auf dem späteren sichtbaren Bereich der Oberfläche der Doppelslushhaut 20 Spuren hinterlassen. Aufgrund dieser Faktoren erfolgt eine Einstellung der zum Entformen zugeführten Überdruckkräfte hinsichtlich ihrer Größe und ihres Eintragortes bezogen auf die Gesamtoberfläche der Doppelslushhaut 20. Der auf die Oberfläche der Doppelslushhaut 20 wirkende Druck lässt sich durch Anordnung von unterschiedlichen Querschnittsflächen der einzelnen Durchbrüche und/oder Mikrolöcher 12 einstellen. Weiterhin erfolgt die Einstellung des Druckes durch die Anordnung der einzelnen Durchbrüche und/oder Mikrolöcher 12 hinsichtlich ihrer Verteilung über die gesamte Oberfläche der Galvanoform 10. Entsprechend den oben genannten Bedingungen zum Ausformen sind die einzelnen Durchbrüche und/oder Mikrolöcher 12 zur Zuführung des Überdruckes gleichmäßig oder ungleichmäßig über die gesamte Oberfläche der Galvanoform 10 verteilt angeordnet.

Eine weitere Variante der erfindungsgemäßen Lösung sieht vor, die Durchbrüche und/oder Mikrolöcher 12 in der Galvanoform 10 zur Zuführung des Überdruckes im Bereich der später nicht sichtbaren Abschnitte der Doppelslushhaut 20 anzuordnen. Diese Bereiche sind solche Bereiche, die später ausgestanzt oder ausgefräst werden und in denen zum Beispiel Armaturen, Ausströmer oder dergleichen angeordnet werden.

Durch die Einstellbarkeit der Größe und des Zuführungsortes des zum Entformen zwischen der ersten Kunststoffschicht 18 und der Galvanoform 10 zugeführten Überdruckes, die entsprechend der erfindungsgemäßen Vorrichtung durch die Anordnung und Größe einzelner Durchbrüche und/oder Mikrolöcher 12 in der Galvanoform 10 erreicht wird, werden Beschädigungen beim Entformen an der sichtbaren Oberfläche der Doppelslushhaut 20 vermieden. Die Ausformung der Doppelslushhaut 20 als Verbundbauteil mit dem Kunststoffträger 16 kann auch bei leichten, konstruktiv bedingten Hinterschnitten, die durch die Außenform der Doppelslushhaut 20 vorgegeben sind, problemlos und ohne Beschädigung der Oberfläche der Doppelslushhaut 20 erfolgen.

Die Darstellung in der Figur 1 zeigt eine bereits entformte Doppelslushhaut 20.

Die erfindungsgemäße Lösung kann auch bei der Herstellung der Doppelslushhaut 20 mittels Formstempel 30 angewendet werden, bei dem die Verbindung der Doppelslushhaut 20 mit dem Kunststoffträger 16 erst nach dem Entformen der Doppelslushhaut 20 durchgeführt wird.

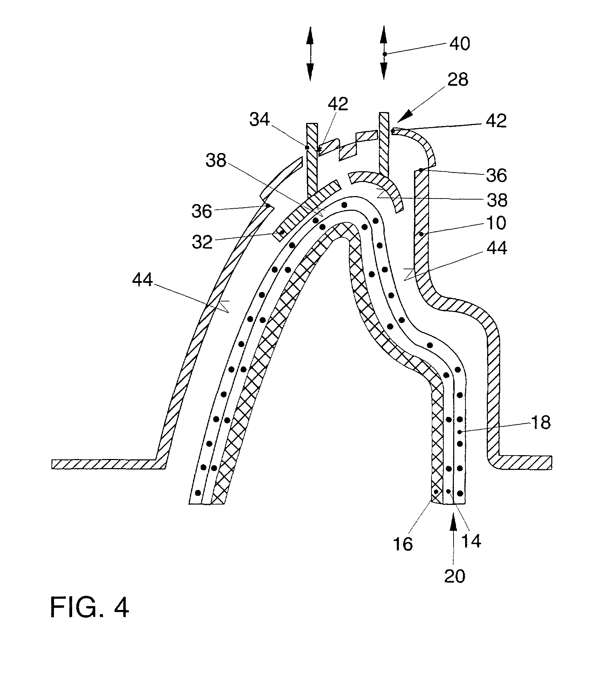

Eine Variante zum Entformen der mit einem Kunststoffträger 16 verbundenen Doppelslushhaut 20 aus einer Galvanoform 10 ist in Figur 4 dargestellt. Dabei sind in die Galvanoform 10 Auswerfer 28 zum Entformen der mit dem Kunststoffträger 16 verbundenen Doppelslushhaut 20 integriert. Dabei können ein oder mehrere Auswerfer 28 in der Galvanoform 10 angeordnet sein. Die Auswerfer 28 umfassen Auswerferplatten 32 und daran angeordnete Betätigungseinrichtungen 34. Die Auswerferplatten 32 sind in korrespondierenden Ausnehmungen 36 angeordnet, so dass eine der Doppelslushhaut 20 zugewandte Oberfläche 38 in die der Doppelslushhaut 20 zugewandte Oberfläche 44 der Galvanoform 10 übergeht.

Zur Reduzierung der Flächenpressung zwischen der ersten Kunststoffschicht 18 der Doppelslushhaut 20 und den Auswerferplatten 32 sind diese als Negativform entsprechend der Oberflächenform der zu entformenden Doppelslushhaut 20 ausgebildet. Vorteilhafterweise erfolgt die Anordnung der Auswerferplatten 32 in den Bereichen der Oberfläche der Doppelslushhaut 20, die später nicht mehr sichtbar sind. Diese Bereiche sind solche Bereiche, die später ausgestanzt oder ausgefräst werden und in denen zum Beispiel Armaturen, Ausströmer oder dergleichen angeordnet werden.

Die Auswerfer 28 sind entsprechend den Doppelpfeilen 40 in Entformungs- und Gegenrichtung verschiebbar in der Galvanoform 10 angeordnet. Dabei sind die Auswerferplatten 32 mittels der Betätigungseinrichtungen 34 in beziehungsweise aus den Ausnehmungen 36 verlagerbar. Die Betätigungseinrichtungen 34 sind vorzugsweise außerhalb der eigentlichen Galvanoform 10 angeordnet. Betätigungsorgane der Betätigungseinrichtungen 34 sind durch Öffnungen 42 der Galvanoform 10 geführt. Außerhalb der Galvanoform 10 umfassen die Betätigungseinrichtungen 34 nicht dargestellte mechanisch, elektrisch, pneumatisch, hydraulisch oder dergleichen wirkende Mittel zum Verschieben der Auswerfer 28. Die Darstellung in der Figur 4 zeigt aus den Ausnehmungen 36 verlagerte Auswerferplatten 32. Die Doppelslushhaut 20 mit dem Kunststoffträger 16 ist also gerade entformt.

Während der Herstellung der Doppelslushhaut 20 in der Galvanoform 10 befinden sich die Auswerfer 28 in ihrer Ausgangsstellung. Das heißt, die Auswerferplatten 32 liegen unmittelbar an der Innenwandung der Galvanoform 10 an. Nach Fertigstellung der Doppelslushhaut 20 und deren Verbindung mit dem Kunststoffträger 16 werden die Auswerfer 28 über die auf die Betätigungseinrichtungen 34 wirkenden mechanisch, elektrisch, pneumatisch, hydraulisch oder dergleichen wirkende Mittel in Entformungsrichtung verschoben. Dabei erfolgt durch das Herausdrücken der Doppelslushhaut 20 mit dem Kunststoffträger 16 durch die Auswerferplatten 32 die Entformung aus der Galvanoform 10. Durch die Form, Größe und Anordnung der Auswerferplatten 32 werden Beschädigungen an der sichtbaren Oberfläche der Doppelslushhaut 20 vermieden. Die Ausformung des Verbundbauteils kann auch bei leichten, konstruktiv bedingten Hinterschnitten, die durch die Außenform der Doppelslushhaut 20 vorgegeben sind, problemlos ohne Beschädigung der Oberfläche der Doppelslushhaut 20 erfolgen. Nach Beendigung des Ausformvorganges werden die Auswerfer 28 wieder in ihre Ausgangsstellung verschoben.

Die erfindungsgemäße Lösung kann, wie bereits dargelegt, auch bei der Herstellung der Doppelslushhaut 20 mittels Formstempel 30 angewendet werden, bei dem die Verbindung der Doppelslushhaut 20 mit dem Kunststoffträger 16 erst nach dem Entformen der Doppelslushhaut 20 durchgeführt wird.

Die Erfindung beschränkt sich selbstverständlich nicht auf das dargestellte Ausführungsbeispiel. So können auch andere Träger als die beispielhaft erwähnten Instrumententafeln mit einer Doppelslushhaut 20 versehen werden. Ferner können Anzahl, Größe und Form der Auswerfer 28 variieren.

Gemäß Figur 2 erfolgt die Herstellung einer Doppelslushhaut 20 in einer die Außenkontur der Doppelslushhaut 20 bestimmenden Galvanoform 10 und wenigstens einer die Innenkontur der Doppelslushhaut 20 definierenden Gegenform, beispielsweise eines Formstempels 30, wobei zwischen Galvanoform 10 und dem Formstempel 30 ein Hohlraum zum Expandieren eines expansionsfähigen Materials zur Herstellung der Doppelslushhaut 20 angeordnet ist. Die Doppelslushhaut 20 besteht aus einer in einem ersten Verfahrensschritt an der Innenwandung der Galvanoform 10 erzeugten Formhaut 18 (erste Kunststoffschicht) und aus einer in einem weiteren Verfahrensschritt hergestellten zweiten Kunststoffschicht 14, die aus einem expansionsfähigen Material besteht und die während des Expansionsvorganges beziehungsweise des Aufschäumprozesses mit der ersten Kunststoffschicht 18 verbunden wird.

Durch Temperierung des Formstempels 30 erfolgt eine Beeinflussung des Aufschäumprozesses beim Bildungsprozess der zweiten Kunststoffschicht 14, um dadurch Beeinträchtigungen bei möglichen Materialschwankungen im Ausgangsmaterial weitestgehend auszuschließen sowie die Herstellungszeit zu verkürzen. Zur Unterstützung des Schäumprozesses wird dem Formstempel 30 ein gegenüber der Umgebungstemperatur erwärmtes Temperierungsmittel zugeführt. Das Temperierungsmittel wird beispielsweise in Form von heißem Wasser, Öl, Luft oder als anderes geeignetes Medium mittels Kanälen, Bohrungen 24 oder dergleichen in das innere des Formstempeis 30 geführt. Die Bohrungen 24, in denen das Temperierungsmittel durch den Formstempel 30 geleitet wird, sind innerhalb eines Randbereiches des Formstempels 30 im Bereich der herzustellenden Kunststoffschicht 14 angeordnet.

Durch das Temperierungsmittel wird einerseits der Aufschäumprozess des expandierenden Materials der zweiten Kunststoffschicht 14 nicht nur von außen über die Galvanoform 10 beeinflusst, sondern auch von innen über den Formstempel 30. Durch entsprechende Temperaturzuführung kann gezielt auf den Bildungsprozess Einfluss genommen werden, wodurch die Herstellungszeit reduziert werden kann. Andererseits erfolgt durch die Zuführung von erwärmten Temperierungsmitteln eine Ausdehnung des Formstempels 30. Durch die entsprechende Temperaturzuführung und der damit verbundenen Ausdehnung des Formstempels 30 wird auch gezielt Einfluss auf die Ausbildung der Wandstärke der Doppelslushhaut 20 genommen.

Nach Beendigung des Aufschäumprozesses und der Bildung der zweiten Kunststoffschicht 14 wird dem Formstempel 30 über die Bohrungen 24 ein gegenüber der Umgebungstemperatur gekühltes Temperierungsmittel zugeführt. Dadurch wird die Abkühlungszeit der hergestellten zweiten Kunststoffschicht 14 verringert, wodurch die Herstellungszeit insgesamt weiter reduziert wird. Außerdem wird durch die Abkühlung des Formstempels 30 wiederum Einfluss auf die Maßbeeinflussung der herzustellenden Doppelslushhaut 20 genommen. Durch entsprechende Temperierung des Formstempels 30 ist eine Größenbeeinflussung des Formstempels 30 und damit der abgeformten Kontur möglich. Durch Materialschwankungen im Ausgangsmaterial hervorgerufene Veränderungen in der Maßgenauigkeit können damit weitestgehend ausgeglichen werden.

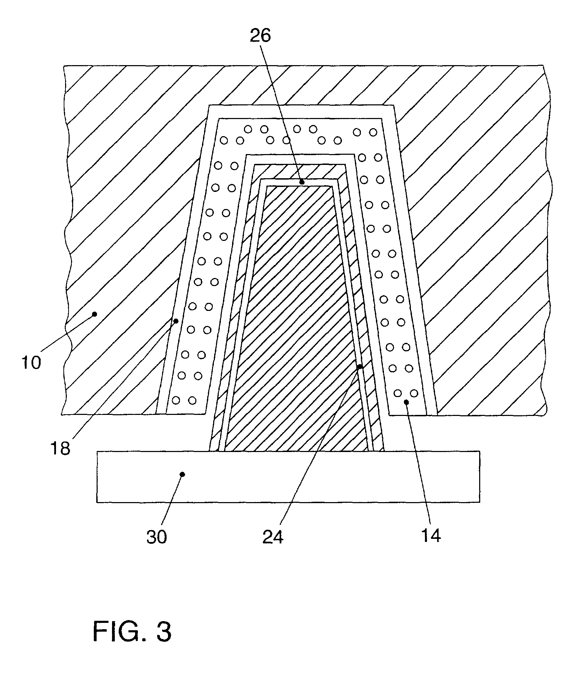

Die Anordnung der Kanäle beziehungsweise der Bohrungen 24 innerhalb des Formstempels 30 kann, wie in Figur 2 dargestellt, quer in Schnittrichtung des Formstempels 30 oder, wie in Figur 3 dargestellt, längs in Schnittrichtung des Formstempels 30 erfolgen. Bei der Anordnung der Bohrungen 24 gemäß Figur 3 werden die Längsbohrungen im unteren Bereich des Formstempels 30 durch Querbohrungen 26 miteinander verbunden.

Nach weiteren Ausführungsbeispielen kann der Formstempel 30 entweder ausschließlich mit erwärmten oder gekühlten Temperaturmitteln beaufschlagt werden.

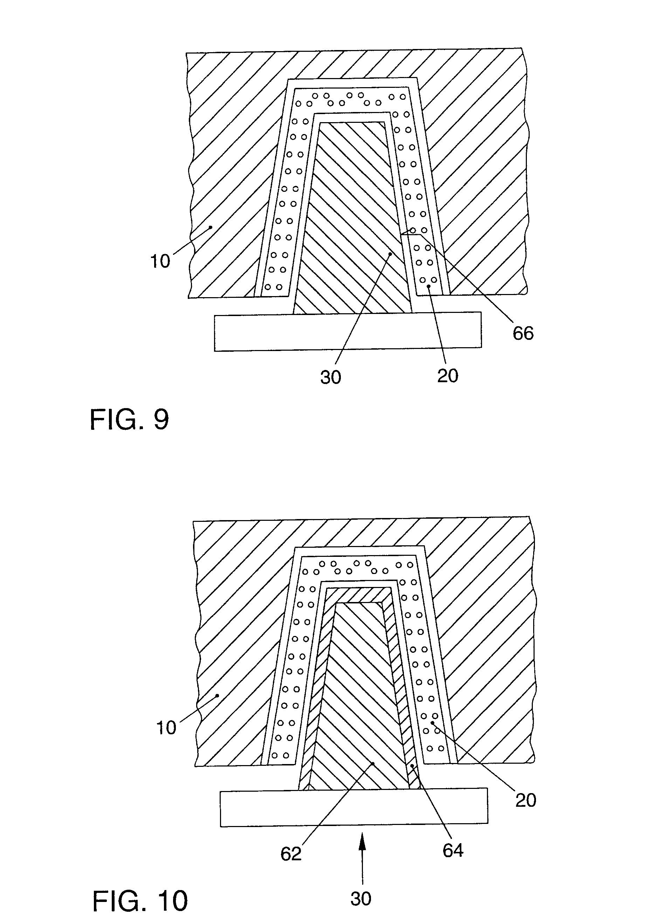

Gemäß den Figuren 9 und 10 besteht der Formstempel 30, der als Negativform der Innenkontur der herzustellenden Doppelslushhaut 20 entspricht, aus einem fertigungstechnisch, mechanisch leicht zu bearbeitenden Material, um bei Beibehaltung der Stabilität des Formstempels 30 den Aufwand für notwendige Formkorrekturen bei der Feinanpassung beziehungsweise Formänderung des Formstempels 30 zu reduzieren sowie eine höhere Genauigkeit der durchzuführenden Korrekturen am Formstempel 30 zu erzielen. Durch die Wahl eines entsprechenden Materials kann eine Oberfläche 66 des Formstempels 30 mit einfachen Mitteln mechanisch leicht bearbeitet werden. Entsprechend notwendige Formänderungen, Feinanpassungen beziehungsweise Korrekturen können an dem Formstempel 30 mit einer hohen Maßgenauigkeit durchgeführt werden. Das hat gleichzeitig zur Folge, dass der Aufwand für die durchzuführenden notwendigen Korrekturen gesenkt wird. Als besonders günstig hat sich herausgestellt, den Formstempel 30 aus Aluminium oder aus Kunstharz herzustellen. Diese Materialien lassen sich mechanisch gut bearbeiten und genügen den Bedingungen beim Herstellungsprozess der Doppelslushhaut 20.

In Figur 10 ist eine Variante des erfindungsgemäßen Formstempels 30 dargestellt. Entsprechend der Ausführungsform besteht der Formstempel 30 aus einem stabilen Kern 62, dessen Oberflächenbereich 64 im Bereich der Doppelslushhaut 20 aus einem fertigungstechnisch, mechanisch leicht zu bearbeitenden Material besteht. Damit können bei Gewährleistung der Stabilität des Formstempels 30 entsprechend notwendige Formänderungen, Feinanpassungen beziehungsweise Korrekturen an dem Formstempel 30 ebenfalls mit einer hohen Maßgenauigkeit und mit einfachen Mitteln durchgeführt werden. Der Kern 62 des Formstempels 30 besteht dabei vorteilhafterweise aus Stahl, während die Oberfläche 64 des Formstempels 30 aus einer Aluminium- oder Kunstharzbeschichtung besteht. Der aus einem fertigungstechnisch, mechanisch leicht zu bearbeitenden Material bestehende Formstempel 30 kann, wie bereits beschrieben, zur Beeinflussung des Bildungs- und/oder Abformprozesses der Doppelslushhaut 20 mit entsprechenden Bohrungen 24 und/oder Bohrungen 26 zur Zuführung des Temperierungsmittels versehen werden.

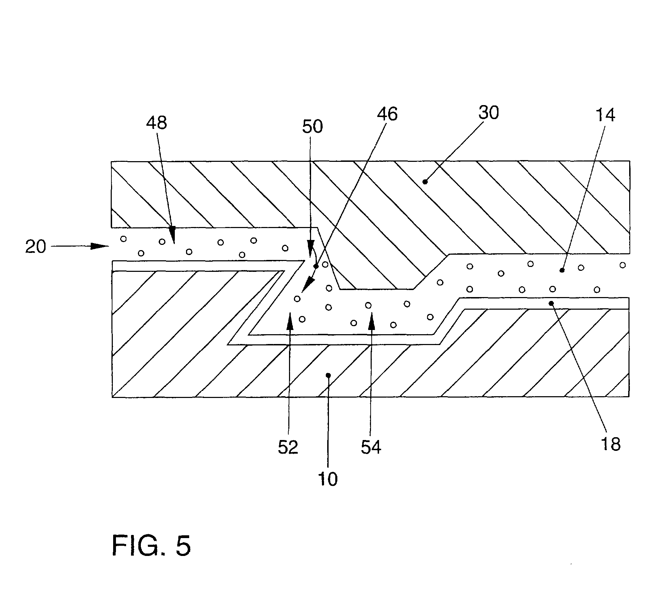

Die äußere Form der Doppelslushhaut 20 wird durch ihren späteren Einsatz, zum Beispiel als Instrumententafel in der Automobilindustrie, bestimmt, so dass konstruktiv bedingte Hinterschnitte zwischen der Galvanoform 10 und der Gegenform, zum Beispiel einem Formstempel 30 oder einem Kunststoffträger 16, und damit eine Einengung der Wandstärke der zu bildenden Doppelslushhaut 20 nicht zu vermeiden sind. Zur Vermeidung einer Druckerhöhung in der Galvanoform 10 durch die Einengung der Wandstärke der Doppelslushhaut 20 und durch die bei der Expansion des mit Treibmitteln beaufschlagten Pulvers auftretenden Kräfte sowie zur Erreichung einer annähernd gleichmäßigen Verteilung des mit Treibmitteln beaufschlagten Pulvers über das Gesamtvolumen des Hohlraumes zwischen innenwandung der Gaivanoform 10 und Außenwandung der Gegenform ist erfindungsgemäß einem ersten Hohlraumbereich 48, der durch die Innenwandung der Galvanoform 10 und der Außenwandung der Gegenform (Formstempel 30) gebildet wird und eine gleichbleibende Querschnittsfläche aufweist, ein zweiter Hohlraumbereich 50 mit einer gegenüber der ersten Querschnittsfläche des ersten Hohlraumbereiches 48 geringeren Querschnittsfläche angeordnet, dem unmittelbar danach ein dritter Hohlraumbereich 52 mit einer gegenüber der zweiten Querschnittsfläche sich vergrößernden Querschnittsfläche angeordnet ist. Durch die unmittelbare Anordnung des dritten Hohlraumbereiches 52 an dem zweiten Hohlraumbereich 50 mit einer geringeren Querschnittsfläche erfolgt ein Materialfluss des expansionsfähigen Materials 14 -während der Expansion - entsprechend der in der Figur 5 angegebenen Materialflussrichtung 46 von dem Hohlraumbereich 50 zu dem Hohlraumbereich 52. Die Querschnittserweiterung des dritten Hohlraumbereiches 52 erfolgt bis zu einer Größe, bei dem die Summe der Volumina des zweiten Hohlraumbereiches 50 und des dritten Hohlraumbereiches 52 annähernd der Summe der Volumina eines angenommenen zweiten Hohlraumbereiches 50 und dritten Hohlraumbereiches 52 bei gleichbleibender Querschnittsfläche entsprechend dem ersten Hohlraumbereich 48 entspricht. Damit wird erreicht, dass eine annähernd gleichmäßige Verteilung des expansionsfähigen Materials der zweiten Kunststoffschicht 14 über den gesamten Hohlraumbereich zwischen Galvanoform 10 und Formstempel 30 erfolgt und dass somit beim Expandieren des Materials keine unzulässigen Druckerhöhungen an der Galvanoform 10 entstehen.

Nach dem dritten, sich erweiternden Hohlraumbereich 52 schließt sich ein weiterer, vierter Hohlraumbereich 54 mit gleichbleibender Querschnittsfläche an, wobei die Querschnittsfläche der des ersten Hohlraumbereiches 48 entspricht.

Bei der Herstellung der Doppelslushhaut 20 wird als Gegenform ein Formstempel 30 oder ein Kunststoffträger 16 verwendet. Unter Verwendung eines Formstempels 30 erfolgt in einem nachfolgenden Herstellungsprozess die Verbindung der Doppelslushhaut 20 mit einem Kunststoffträger 16, während unter Verwendung des Kunststoffträgers 16 als Gegenform beim Expansionsvorgang des Materials bereits die Verbindung der Doppelslushhaut 20 mit dem Kunststoffträger 16 erfolgt.

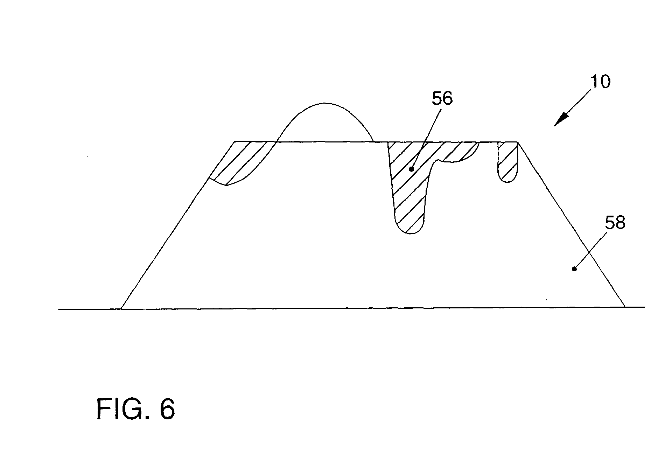

Zur Verbesserung der Stabilität der Galvanoform 10 und zur besseren Einhaltung der Formgenauigkeit der herzustellenden Doppelslushhaut 20 besteht gemäß Figur 6 die Galvanoform 10 aus mehreren Baugruppen mit unterschiedlichen Materialien. Im späteren sichtbaren Bereich der Oberfläche der herzustellenden Doppelslushhaut 20 besteht die Baugruppe 58 der Galvanoform 10 aus Nickel. Im späteren nicht sichtbaren Bereich der Oberfläche der herzustellenden Doppelslushhaut 20 besteht die Baugruppe 56 der Galvanoform 10 aus Edelstahl. Die nicht sichtbaren Bereiche der Oberfläche der Doppelslushhaut 20 sind in der Regel, wie schon dargelegt, solche Bereiche, die später durch Anordnung von Zusatzeinrichtungen ausgestanzt oder ausgefräst werden. Die einzelnen, aus Nickel bestehenden Baugruppen 58 und die aus Edelstahl bestehenden Baugruppen 56 werden durch Laserschweißen miteinander zu der Galvanoform 10 gefügt.

Durch die Verbindung der aus Edelstahl bestehenden Baugruppen 56, die eine hohe Festigkeit und Stabilität besitzen, mit den aus Nickel bestehenden Baugruppen 58, die sich insbesondere durch hohe Formgenauigkeit auszeichnen, zu einer Galvanoform 10 wird die Stabilität der Galvanoform 10, bei Realisierung einer hohen Maßgenauigkeit, erhöht. Dadurch besteht die Möglichkeit, im Bereich der aus Edelstahl bestehenden Baugruppen 56 Baugruppen mit zusätzlichen mechanischen Funktionen anzuordnen. Außerdem können die Baugruppen der Galvanoform 10 bei entsprechendem Bedarf durch Einbau zusätzlicher Teile verlängert oder durch Kürzung der Baugruppen, oder Teilen davon, verkürzt werden.

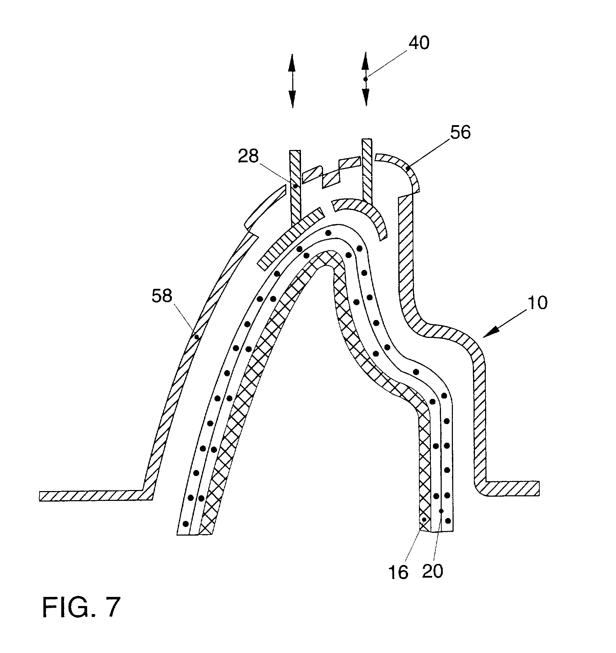

In der Figur 7 ist eine Variante der erfindungsgemäßen Vorrichtung dargestellt. Dabei sind im Bereich der aus Edelstahl bestehenden Baugruppen 56 Baugruppen mit zusätzlichen mechanischen Funktionen angeordnet. In diesem speziellen Fall sind Auswerfer 28 als Baugruppen mit zusätzlichen mechanischen Funktionen angeordnet. Die Auswerfer 28 haben die Aufgabe, nach Fertigstellung der Doppelslushhaut 20 diese aus der Galvanoform 10 auszutragen. Die aus mehreren Baugruppen bestehende Galvanoform 10 kann auch, wie bereits beschrieben, mit Einrichtungen zur Zuführung eines Überdrucks zwischen der Galvanoform 10 und der Doppelslushhaut 20 versehen werden. Die erfindungsgemäße Galvanoform 10 ist sowohl einsetzbar unter Verwendung eines in die Galvanoform 10 einfahrenden Formstempels 30 zur Erzeugung einer definierten Innenkontur der Doppelslushhaut 20, als auch unter Verwendung eines in die Galvanoform 10 eingebrachten Kunststoffträgers 16.

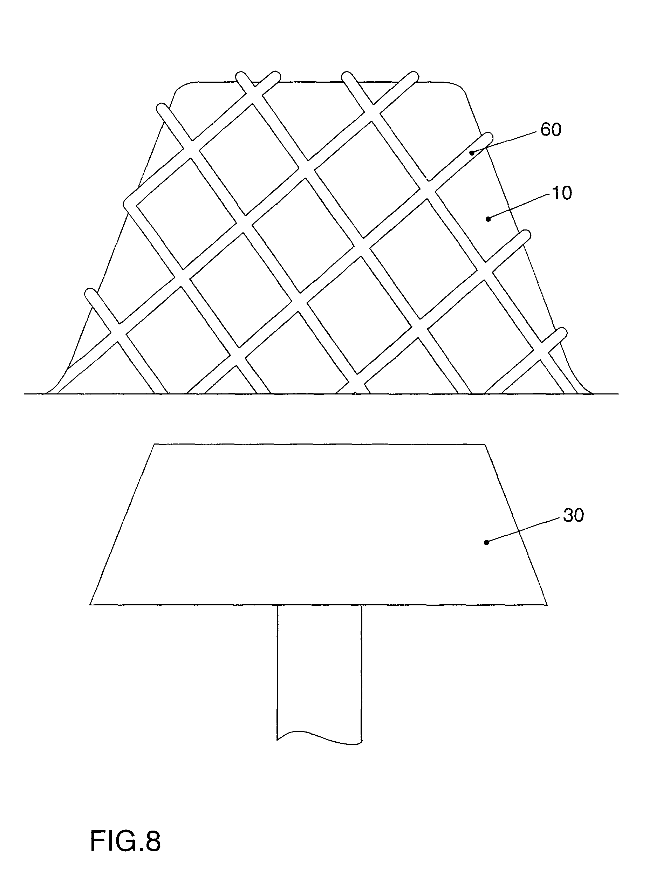

Eine weitere Variante zur Ausbildung der Galvanoform 10 ist in Figur 8 dargestellt. Die Galvanoform 10 ist dabei so ausgebildet, dass sie die beim Herstellungsprozess der Doppelslushhaut 20 auftretenden Druckkräfte ohne Formveränderungen aufnehmen kann und somit eine erhöhte Biegesteifigkeit gegenüber den bekannten Vorrichtungen aufweist. Dazu sind an der Außenseite der Galvanoform 10 Versteifungen in Form von Rippen 60 angeordnet. Durch die Anordnung der Versteifungen auf der Oberfläche der Außenseite der Galvanoform 10 wird die Biegesteifigkeit und die Stabilität der Gaivanoform 10 erhöht. Die auftretenden Druckkräfte beim Einfahren der Gegenform (Formstempel 30) in die Galvanoform 10 sowie die beim Abformprozess der Doppelslushhaut 20 entstehenden Druckkräfte können durch die Galvanoform 10 aufgenommen werden, ohne dass diese sich dabei verformt. Dadurch werden auch Kontur- und Formänderungen an der herzustellenden Doppelslushhaut 20 ausgeschlossen.

Die Anordnung der Versteifungen beziehungsweise der Rippen 60 an der Außenseite der Galvanoform 10 erfolgt in Längs- und/oder Querrichtung. In der Figur 8 ist eine rautenförmige Anordnung der Rippen 60 auf der Außenseite der Galvanoform 10 dargestellt.

Die entsprechenden Versteifungen beziehungsweise die Rippen 60 werden beispielsweise durch Laserschweißen oder durch Galvanisierung auf der Außenseite der Galvanoform 10 aufgebracht.

Diese Versteifungen können selbstverständlich auch an den aus mehreren Baugruppen bestehenden Galvanoformen 10 angeordnet werden. Die erfindungsgemäß dargelegten Lösungen lassen sich entsprechend kombiniert einsetzen, ohne dass hierbei nochmals zusätzlich darauf eingegangen werden muss. Durch die erfindungsgemäße Lösung kann der Bildungs-, Abform- und Entformungsprozess bei der Herstellung einer Doppelslushhaut 20 aktiv beeinflusst werden.

### BEZUGSZEICHENLISTE

- 10: Galvanoform
- 12: Durchbrüche und/oder Mikrolöcher
- 14: zweite Kunststoffschicht
- 16: Kunststoffträger
- 18: erste Kunststoffschicht
- 20: Doppelslushhaut
- 22: Druckquelle
- 24: Bohrungen
- 26: Querbohrungen
- 28: Auswerfer
- 30: Formstempel
- 32: Auswerferplatten
- 34: Betätigungseinrichtung
- 36: Ausnehmung
- 38: Oberfläche
- 40: Entformungs- und Gegenrichtung
- 42: Öffnung
- 44: Oberfläche
- 46: Materialflussrichtung
- 48: erster Hohlraumbereich
- 50: zweiter Hohlraumbereich
- 52: dritter Hohlraumbereich
- 54: vierter Hohlraumbereich
- 56: aus Edelstahl bestehende Baugruppe
- 58: aus Nickel bestehende Baugruppe
- 60: Rippen
- 62: Kern des Formstempels
- 64: Oberflächenbereich des Formstempels
- 66: Oberfläche

## Patentansprüche

1. Verfahren zur Herstellung einer Doppelslushhaut (20), wobei an einer Kontur einer Galvanoform (10) eine erste Kunststoffschicht (18) erzeugt wird, anschließend auf der ersten Kunststoffschicht (18) eine zweite expandierende Kunststoffschicht (14) erzeugt wird, deren Innenkontur durch einen Formstempel (30) oder durch einen Kunststoffträger (16) erzeugt wird, **dadurch gekennzeichnet, dass** bei der Herstellung einer Doppelslushhaut (20) der Bildungs-, und/oder Abform-, und/oder Entformungsprozess beeinflusst wird.

2. Verfahrens nach Anspruch 1, **dadurch gekennzeichnet, dass** zum Entformen zwischen der ersten Kunststoffschicht (18) und der Form ein Überdruck erzeugt wird.

3. Verfahren nach einem der vorhergehenden Ansprüche, **dadurch gekennzeichnet, dass** der Überdruck über die Galvanoform (10) zugeführt wird.

4. Verfahren nach einem der vorhergehenden Ansprüche, **dadurch gekennzeichnet, dass** die Größe des Überdrucks einstellbar ist.

5. Verfahren nach einem der vorhergehenden Ansprüche, **dadurch gekennzeichnet, dass** der Überdruck auf pneumatische Weise erzeugt wird.

6. Verfahren nach einem der vorhergehenden Ansprüche, **dadurch gekennzeichnet, dass** der Überdruck über die Gesamtfläche der zu entformenden Doppelslushhaut (20) mit unterschiedlichen Größen zugeführt wird.

7. Verfahren nach einem der vorhergehenden Ansprüche, **dadurch gekennzeichnet, dass** ein erhöhter Überdruck im Bereich der später nicht sichtbaren Abschnitte der zu entformenden Doppelslushhaut (20) zugeführt wird.

8. Verfahren nach Anspruch 2 bis 6, **dadurch gekennzeichnet, dass** der Überdruck über die Gesamtfläche der zu entformenden Doppelslushhaut (20) gleich groß ist.

9. Verfahrens nach Anspruch 1, **dadurch gekennzeichnet, dass** zur Beeinflussung des Bildungs- und/oder Abformprozesses der Kunststoffschichten der Formstempel (30) temperiert wird.

10. Verfahrens nach Anspruch 9, **dadurch gekennzeichnet, dass** dem Formstempel (30) ein Temperierungsmittel zugeführt wird.

11. Verfahrens nach Anspruch 9 und 10, **dadurch gekennzeichnet, dass** das Temperierungsmittel in das Innere des Formstempels (30) zugeführt wird.

12. Verfahrens nach Anspruch 9 bis 11, **dadurch gekennzeichnet, dass** das Temperierungsmittel im Inneren des Formstempels (30) im Bereich der herzustellenden Kunststoffschichten zugeführt wird.

13. Verfahrens nach Anspruch 9 bis 12, **dadurch gekennzeichnet, dass** das Temperierungsmittel Wasser, Öl, Luft oder ein ähnliches Medium ist.

14. Verfahrens nach Anspruch 9 bis 13, **dadurch gekennzeichnet, dass** das Temperierungsmittel ein gegenüber der Umgebungstemperatur erwärmtes Medium ist.

15. Verfahrens nach Anspruch 9 bis 13, **dadurch gekennzeichnet, dass** das Temperierungsmittel ein gegenüber der Umgebungstemperatur gekühltes Medium ist.

16. Verfahrens nach Anspruch 9 bis 15, **dadurch gekennzeichnet, dass** beim Expansions- beziehungsweise Aufschäumprozess der Kunststoffschichten dem Formstempel (30) ein erwärmtes Medium als Temperierungsmittel zugeführt wird.

17. Verfahrens nach Anspruch 16, **dadurch gekennzeichnet, dass** beim Ausformprozess der Kunststoffschichten dem Formstempel (30) ein gekühltes Medium als Temperierungsmittel zugeführt wird.

18. Vorrichtung zur Herstellung einer Doppelslushhaut (20), mit einer die Außenkontur der Doppelslushhaut (20) bestimmenden Form und wenigstens einer die Innenkontur der Doppelslushhaut (20) definierenden Gegenform, wobei zwischen Form und Gegenform ein Hohlraum zum Expandieren eines expansionsfähigen Materials der Doppelslushhaut (20) ausgebildet ist, **gekennzeichnet durch** Mittel zur Beeinflussung des Bildungs-, und/oder Abform-, und/oder Entformungsprozess bei der Herstellung einer Doppelslushhaut (20).

19. Vorrichtung nach Anspruch 18, **dadurch gekennzeichnet, dass** zum Entformen der Doppelslushhaut (20) eine Einrichtung zur Zuführung eines Überdruckes zwischen Galvanoform (10) und Doppelslushhaut (20) angeordnet ist.

20. Vorrichtung nach Anspruch 19, **dadurch gekennzeichnet, dass** die Einrichtung zur Zuführung eines Überdruckes in der Galvanoform (10) angeordnete Durchbrüche (12) sind.

21. Vorrichtung nach Anspruch 19, **dadurch gekennzeichnet, dass** die Einrichtung zur Zuführung eines Überdruckes in der Galvanoform (10) angeordnete Mikrolöcher (12) sind.

22. Vorrichtung nach Anspruch 19 bis 21, **dadurch gekennzeichnet, dass** die Querschnittsflächen der einzelnen Durchbrüche und/oder Mikrolöcher (12) zur Zuführung des Überdruckes mit gleicher Größe ausgebildet sind.

23. Vorrichtung nach Anspruch 19 bis 21, **dadurch gekennzeichnet, dass** die Querschnittsflächen der einzelnen Durchbrüche und/oder Mikrolöcher (12) zur Zuführung des Überdruckes mit unterschiedlichen Größen ausgebildet sind.

24. Vorrichtung nach Anspruch 19 bis 23, **dadurch gekennzeichnet, dass** die Durchbrüche und/oder Mikrolöcher (12) zur Zuführung eines Überdruckes gleichmäßig verteilt über die gesamte Oberfläche der Galvanoform (10) angeordnet sind.

25. Vorrichtung nach Anspruch 19 bis 23, **dadurch gekennzeichnet, dass** die Durchbrüche und/oder Mikrolöcher (12) zur Zuführung eines Überdruckes ungleichmäßig verteilt über die gesamte Oberfläche der Galvanoform (10) angeordnet sind.

26. Vorrichtung nach Anspruch 19 bis 25, **dadurch gekennzeichnet, dass** die Durchbrüche und/oder Mikrolöcher (12) in der Galvanoform (10) zur Zuführung eines Überdruckes im Bereich der später nicht sichtbaren Abschnitte der Doppelslushhaut (20) angeordnet sind.

27. Vorrichtung nach Anspruch 18, **dadurch gekennzeichnet, dass** der Formstempel (30) wenigstens eine Einrichtung zur Zuführung eines Temperierungsmittels umfasst.

28. Vorrichtung nach Anspruch 27, **dadurch gekennzeichnet, dass** die Einrichtung zur Zuführung des Temperierungsmittels in den Formstempel (30) angeordnete Kanäle, Bohrungen (24) oder dergleichen sind.

29. Vorrichtung nach Anspruch 27 und 28, **dadurch gekennzeichnet, dass** die Bohrungen (24) im Randbereich des Formstempels (30) angeordnet sind.

30. Vorrichtung nach Anspruch 27 bis 29, **dadurch gekennzeichnet, dass** die Bohrungen (24) in Entformungsrichtung des Formstempels (30) verlaufend angeordnet sind.

31. Vorrichtung nach Anspruch 27 bis 30, **dadurch gekennzeichnet, dass** die Bohrungen (24) quer zur Entformungsrichtung des Formstempels (30) verlaufend angeordnet sind.

32. Vorrichtung nach Anspruch 27 bis 31, **dadurch gekennzeichnet, dass** in Entformungsrichtung des Formstempels (30) verlaufende Bohrungen (24) durch wenigstens eine, quer zur Entformungsrichtung angeordnete Bohrung (26) miteinander verbunden sind.

33. Vorrichtung nach Anspruch 18, **dadurch gekennzeichnet, dass** in die Vorrichtung wenigstens ein Auswerfer (28) zum Entformen der Doppelslushhaut (20) integriert ist.

34. Vorrichtung nach Anspruch 33, **dadurch gekennzeichnet, dass** der wenigstens eine Auswerfer (28) in die Galvanoform (10) integriert ist.

35. Vorrichtung nach Anspruch 33 und 34, **dadurch gekennzeichnet, dass** die Auswerfer (28) aus einer Auswerferplatte (32) und einer Betätigungseinrichtung (34) bestehen.

36. Vorrichtung nach Anspruch 33 bis 35, **dadurch gekennzeichnet, dass** die Form der Auswerferplatten (32) im Berührungsbereich mit der Oberfläche der Doppelslushhaut (20) als Negativform der Form der Doppelslushhaut (20) entspricht.

37. Vorrichtung nach Anspruch 33 bis 36, **dadurch gekennzeichnet, dass** die Auswerferplatten (32) in einem Bereich der Oberfläche der zu entformenden Doppelslushhaut (20) angeordnet sind, der später nicht sichtbar ist.

38. Vorrichtung nach Anspruch 33 bis 37, **dadurch gekennzeichnet, dass** die Auswerferplatten (32) in Entformungs- und Gegenrichtung (40) verschiebbar angeordnet sind.

39. Vorrichtung nach Anspruch 33 bis 38, **dadurch gekennzeichnet, dass** an den Auswerferplatten (32) angeordnete Betätigungseinrichtungen (34) außerhalb der Galvanoform (10) angeordnet sind.

40. Vorrichtung nach Anspruch 33 bis 39, **dadurch gekennzeichnet, dass** die Auswerfer (28) über die an den Betätigungseinrichtungen (34) angeordneten mechanisch, elektrisch, pneumatisch, hydraulisch oder dergleichen wirkenden Mitteln verschiebbar sind.

41. Vorrichtung nach Anspruch 18, **dadurch gekennzeichnet, dass** einem ersten Hohlraumbereich (48) mit einer im Wesentlichen gleichbleibenden Querschnittsfläche, dem ein zweiter Hohlraumbereich (50) mit einer gegenüber der ersten Querschnittsfläche geringeren Querschnittsfläche zugeordnet ist, ein dritter Hohlraumbereich (52) mit einer gegenüber der zweiten Querschnittsfläche sich vergrößernden Querschnittsfläche zugeordnet ist.

42. Vorrichtung nach Anspruch 41, **dadurch gekennzeichnet, dass** die Querschnittsfläche des dritten Hohlraumbereiches (52) erweitert ist.

43. Vorrichtung nach Anspruch 41 und 42, **dadurch gekennzeichnet, dass** die Querschnittserweiterung des dritten Hohlraumbereiches (52) bis zu einer Größe erfolgt, bei dem die Summe der Volumina des zweiten Hohlraumbereiches (50) und dritten Hohlraumbereiches (52) annähernd der Summe der Volumina eines angenommenen zweiten Hohlraumbereiches (50) und dritten Hohlraumbereiches (52) bei gleichbleibender Querschnittsfläche entspricht.

44. Vorrichtung nach Anspruch 41 bis 43, **dadurch gekennzeichnet, dass** dem dritten Hohlraumbereich (52) ein weiterer, vierter Hohlraumbereich (54) mit gleichbleibender Querschnittsfläche zugeordnet ist.

45. Vorrichtung nach Anspruch 44, **dadurch gekennzeichnet, dass** die Querschnittsflächen des vierten Hohlraumbereiches (54) und des ersten Hohlraumbereiches (48) nahezu gleich groß sind.

46. Vorrichtung nach Anspruch 41 bis 45, **dadurch gekennzeichnet, dass** die Gegenform ein Formstempel (30) ist.

47. Vorrichtung nach Anspruch 41 bis 45, **dadurch gekennzeichnet, dass** die Gegenform ein beim Expandieren des Materials mit der Doppelslushhaut (20) verbindbarer Kunststoffträger (16) ist.

48. Vorrichtung nach Anspruch 18, **dadurch gekennzeichnet, dass** die Galvanoform (10) aus wenigstens zwei Baugruppen besteht.

49. Vorrichtung nach Anspruch 48, **dadurch gekennzeichnet, dass** die Baugruppen aus unterschiedlichen Materialien bestehen.

50. Vorrichtung nach Anspruch 48 und 49, **dadurch gekennzeichnet, dass** die Baugruppen aus Nickel (58) und Edelstahl (56) bestehen.

51. Vorrichtung nach Anspruch 48 bis 50, **dadurch gekennzeichnet, dass** die Baugruppen miteinander verschweißt sind.

52. Vorrichtung nach Anspruch 48 bis 51, **dadurch gekennzeichnet, dass** die Baugruppen durch Laserschweißen miteinander verschweißt sind.

53. Vorrichtung nach Anspruch 48 bis 52, **dadurch gekennzeichnet, dass** die aus Nickel bestehenden Baugruppen (58) im sichtbaren Bereich der Oberfläche der herzustellenden Doppelslushhaut (20) angeordnet sind.

54. Vorrichtung nach Anspruch 48 bis 53, **dadurch gekennzeichnet, dass** die aus Edelstahl bestehenden Baugruppen (56) im später nicht sichtbaren Bereich der Oberfläche der herzustellenden Doppelslushhaut (20) angeordnet sind.

55. Vorrichtung nach Anspruch 48 bis 54, **dadurch gekennzeichnet, dass** im Bereich der aus Edelstahl bestehenden Baugruppen (56) Baugruppen mit mechanischen Funktionen angeordnet sind.

56. Vorrichtung nach Anspruch 48 bis 55, **dadurch gekennzeichnet, dass** die Baugruppen mit mechanischen Funktionen mechanisch betätigte Auswerfer (28) sind.

57. Vorrichtung nach Anspruch 18, **dadurch gekennzeichnet, dass** an den Außenseiten der Galvanoform (10) Versteifungen angeordnet sind.

58. Vorrichtung nach Anspruch 57, **dadurch gekennzeichnet, dass** die an der Außenseite der Galvanoform (10) angeordneten Versteifungen Rippen (60) sind.

59. Vorrichtung nach Anspruch 57 und 58, **dadurch gekennzeichnet, dass** die Rippen (60) an der Außenseite der Galvanoform (10) in Längs- und/oder Querrichtung angeordnet sind.

60. Vorrichtung nach Anspruch 57 und 58, **dadurch gekennzeichnet, dass** die Rippen (60) rautenförmig an der Außenseite der Galvanoform (10) angeordnet sind.

61. Vorrichtung nach Anspruch 57 bis 60, **dadurch gekennzeichnet, dass** die Rippen (60) auf die Außenseite der Galvanoform (10) durch Laserschweißen aufgebracht sind.

62. Vorrichtung nach Anspruch 57 bis 60, **dadurch gekennzeichnet, dass** die Rippen (60) auf die Außenseite der Galvanoform (10) aufgalvanisiert sind.

63. Vorrichtung nach Anspruch 18, **dadurch gekennzeichnet, dass** der Formstempel (30) zumindest bereichsweise aus einem fertigungstechnisch, mechanisch leicht bearbeitbaren Material besteht.

64. Vorrichtung nach Anspruch 63, **dadurch gekennzeichnet, dass** der Formstempel (30) aus Aluminium besteht.

65. Vorrichtung nach Anspruch 63, **dadurch gekennzeichnet, dass** der Formstempel (30) aus Kunstharz besteht.

66. Vorrichtung nach Anspruch 63, **dadurch gekennzeichnet, dass** ein Kern (62) des Formstempels (30) aus einem stabilen Material und ein Oberflächenbereich (64) des Formstempels (30) aus einem fertigungstechnisch, mechanisch leicht bearbeitbaren Material besteht.

67. Vorrichtung nach Anspruch 66, **dadurch gekennzeichnet, dass** der Kern (62) des Formstempels (30) aus Stahl besteht.

68. Vorrichtung nach Anspruch 66 und 67, **dadurch gekennzeichnet, dass** der Oberflächenbereich (64) des Formstempels (30) aus Aluminium besteht.

69. Vorrichtung nach Anspruch 66 und 67, **dadurch gekennzeichnet, dass** der Oberflächenbereich (64) des Formstempels (30) aus Kunstharz besteht.

70. Vorrichtung zur Herstellung einer Doppelslushhaut (20), mit einer die Außenkontur der Doppelslushhaut (20) bestimmenden Form und wenigstens einer die Innenkontur der Doppelslushhaut (20) definierenden Gegenform, wobei zwischen Form und Gegenform ein Hohlraum zum Expandieren eines expansionsfähigen Materials der Doppelslushhaut (20) ausgebildet ist, **dadurch gekennzeichnet, dass** die Mittel zur Beeinflussung des Bildungs-, und/oder Abform-, und/oder Entformungsprozess bei der Herstellung einer Doppelslushhaut (20) aus einer Kombination von mehreren Merkmalen der Ansprüche 19 bis 69 bestehen.
